# EUROPEAN PATENT APPLICATION

(11) **EP 4 015 125 A1**
(43) Date of publication of application: **22.06.2022**
(21) Application number: 20871604.3
(22) Date of filing: 28.09.2020
(51) Int. Cl.: B23K 3/08, B23K 3/00, B23K 3/04

(54) **EVALUATING DEVICE**

(30) Priority: 30.09.2019 JP 2019179444
(71) Applicant: Daikin Industries, Ltd., Osaka-shi, Osaka 530-8323 (JP)
(72) Inventor: HAYASHIDA, Kentarou, Osaka-shi, Osaka 530-8323 (JP); HAMA, Yasunori, Osaka-shi, Osaka 530-8323 (JP)
(74) Representative: Hoffmann Eitle
(86) International application number: PCT/JP2020/036686
(87) International publication number: WO 2021/065822

(57) **Abstract**

An evaluating device (14) for evaluating a joining operation of joining first and second base materials with each other includes: a data acquisition unit (18) configured to acquire time-series data of at least one type of a position of at least one of the first base material or the second base material, a position of a flame, a position of a brazing filler metal, or a temperature of at least one of the first base material or the second base material during the joining operation; and an evaluation unit (19) configured to evaluate, by different evaluation methods, data before a predetermined wire feeding start timing and data after the predetermined wire feeding start timing among the time-series data acquired by the data acquisition unit (18).

## Description

### TECHNICAL FIELD

The present disclosure relates to an evaluating device for evaluating a joining operation of joining first and second base materials with each other.

### BACKGROUND ART

Patent Document 1 discloses an evaluating device for evaluating a joining operation of joining first and second base materials with each other.

### CITATION LIST

### PATENT DOCUMENT

PATENT DOCUMENT 1: Japanese Patent No. 5921898

### SUMMARY

### TECHNICAL PROBLEM

Meanwhile, there is a demand for more appropriately evaluating a joining operation performed by brazing. The joining operation performed by brazing includes a pipe heating step of heating first and second base materials; and a wire feeding step of feeding a brazing filler metal. When the joining operation in the pipe heating step and the joining operation in the wire feeding step are evaluated by the same evaluation method, appropriate evaluation results cannot be obtained.

In view of the foregoing, it is therefore an object of the present disclosure to appropriately evaluate the joining operation performed by brazing.

### SOLUTION TO THE PROBLEM

A first aspect is directed to an evaluating device for evaluating a joining operation of joining first and second base materials (PI, P2) with each other. The evaluating device includes a data acquisition unit (18) configured to acquire time-series data of at least one type of a position of at least one of the first base material (P1) or the second base material (P2), a position of a flame (F), a position of a brazing filler metal (W), or a temperature of at least one of the first base material (P1) or the second base material (P2) during the joining operation; and an evaluation unit (19) configured to evaluate, by different evaluation methods, data before a predetermined wire feeding start timing and data after the predetermined wire feeding start timing among the time-series data acquired by the data acquisition unit (18).

In the first aspect, the time-series data before and after the wire feeding start timing are evaluated by different evaluation methods. This makes it easier to achieve a more appropriate evaluation than when using the same evaluation method.

A second aspect of the present disclosure is an embodiment of the first aspect. In the second aspect, the time-series data acquired by the data acquisition unit (18) include first data of the position of the brazing filler metal (W), and the evaluation unit (19) specifies the wire feeding start timing based on the first data.

In the second aspect, the evaluation unit (19) automatically specifies the wire feeding start timing. This eliminates the need for setting the wire feeding start timing on the evaluating device (14).

A third aspect is an embodiment of the first or second aspect. In the third aspect, the evaluation unit (19) evaluates, by different evaluation methods, data before a predetermined uniform heating start timing and data after the predetermined uniform heating start timing among the time-series data acquired by the data acquisition unit (18).

In the third aspect, the time-series data before and after the uniform heating start timing are evaluated by different evaluation methods. This makes it easier to achieve a more appropriate evaluation than when using the same evaluation method.

A fourth aspect of the present disclosure is an embodiment of the third aspect. In the fourth aspect, the time-series data acquired by the data acquisition unit (18) includes second data of at least one type of a position of the flame (F) or the temperature of at least one of the first base material (P1) or the second base material (P2), and the evaluation unit (19) specifies the uniform heating start timing based on the second data.

In the fourth aspect, the evaluation unit (19) automatically specifies the uniform heating start timing. This eliminates the need for setting the uniform heating start timing on the evaluating device (14).

A fifth aspect of the present disclosure is an embodiment of any one of the first to fourth aspects. In the fifth aspect, the evaluation unit (19) performs the evaluation based on the difference between the time-series data and the evaluation reference value, and the evaluation reference value includes an evaluation reference value for data before the wire feeding start timing and an evaluation reference value for data after the wire feeding start timing.

In the fifth aspect, different evaluation reference values are used for evaluations of the time-series data before and after the wire feeding start timing. Setting evaluation reference values used for respective evaluations of the time-series data before and after the wire feeding start timing to appropriate values allows appropriate evaluation of each of the joining operations before and after the wire feeding start timing.

### BRIEF DESCRIPTION OF THE DRAWINGS

FIG. 1 is a schematic perspective view of a joining operation evaluation system including an evaluating device of an embodiment.
FIG. 2 illustrates an example of a first image captured by a side camera.
FIG. 3 illustrates an example of a second image captured by an upper camera.
FIG. 4 illustrates an example of a third image captured by a front camera.
FIG. 5 is a functional block diagram of the evaluating device.
FIG. 6 is a flowchart illustrating evaluation procedures executed by the evaluating device.
FIG. 7 is a graph illustrating time-series data of the distance between an operation flame and the center of pipes obtained during the joining operation before filtering processing.
FIG. 8 is a graph illustrating time-series data of the distance between an operation flame and the center of pipes obtained during the joining operation after filter processing.
FIG. 9 is a graph illustrating an example of time-series data of a brazing filler metal introduction position during a joining operation.
FIG. 10 is graph illustrating another example of time-series data of a brazing filler metal introduction position during a joining operation.

### DESCRIPTION OF EMBODIMENT

An embodiment of the present disclosure will be described below with reference to the drawings. Note that the following embodiment and variations are merely beneficial examples in nature, and are not intended to limit the scope, applications, or use of the present invention.

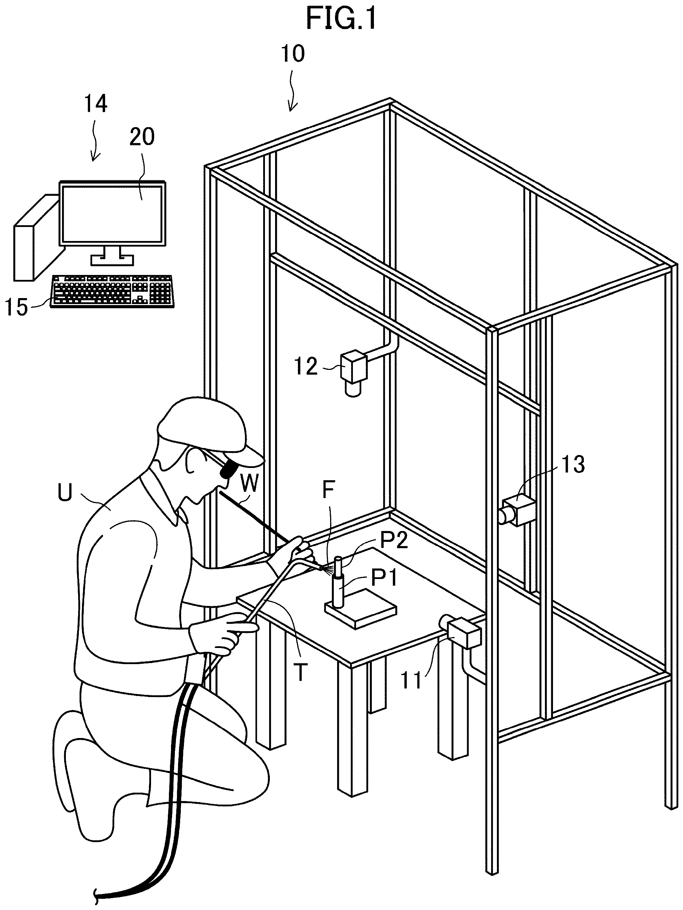

FIG. 1 shows a joining operation evaluation system (10). This joining operation evaluation system (10) evaluates a joining operation of joining a cylindrical first pipe (P1) as a first base material and a cylindrical second pipe (P2) as second base material with each other, by brazing performed by an operator (U). The joining operation includes a pipe heating step and a wire feeding step. The pipe heating step and the wire feeding step are performed with one end of the first pipe (P1) facing upward and one end of the second pipe (P2) inserted into the first pipe (P1) from above. The pipe heating step is a step of heating the first and second pipes (P1, P2), and includes a pipe pre-heating step and a uniform heating step. The pipe pre-heating step is for the operator (U) to apply a flame (F) generated from a torch (T) to the vicinity of the boundary between both the first and second pipes (PI, P2) (U) without moving the flame (F) so much. The uniform heating step is performed next to the pipe pre-heating step and is for the operator (U) to apply the flame (F) generated from the torch (T) to the vicinity of the boundary between both the first and second pipes (PI, P2) while moving the flame (F) in the circumferential direction of the first and second pipes (PI, P2). The uniform heating step is performed so that the temperature around the boundary between both the first and second pipes (PI, P2) are uniformized over the entire circumference. The wire feeding step is performed next to the uniform heating step and is for the operator (U) to feed a brazing filler metal (W) while applying the flame (F) generated from the torch (T) to the vicinity of the boundary between both the first and second pipes (PI, P2).

The brazing filler metal (W) can be a phosphor copper brazing filler metal, a silver brazing filler metal, a brass brazing filler metal, an aluminum alloy (aluminum brazing filler metal), or any other brazing filler metal. If the phosphor copper brazing filler metal is employed as the brazing filler metal (W), a combination of the materials of both the first and second pipes (PI, P2) to be employed can be a combination of copper and copper, a combination of copper and a copper alloy, a combination of copper and steel, or a combination of different kinds of metals (two kinds of metals) which have been plated with copper. If the silver brazing filler metal or brass brazing filler metal is employed as the brazing filler metal (W), a combination of materials of both the first and second pipes (P1, P2) to be employed can be a combination of copper and steel or a combination of steel and steel. If the aluminum alloy is employed as the brazing filler metal (W), a combination of the materials of both the first and second pipes (PI, P2) to be employed can be a combination of aluminum and copper, a combination of aluminum and a copper alloy, or a combination of aluminum and aluminum.

The joining operation evaluation system (10) includes a side camera (11), an upper camera (12), a front camera (13), and the evaluating device (14) according to the embodiment of the present disclosure.

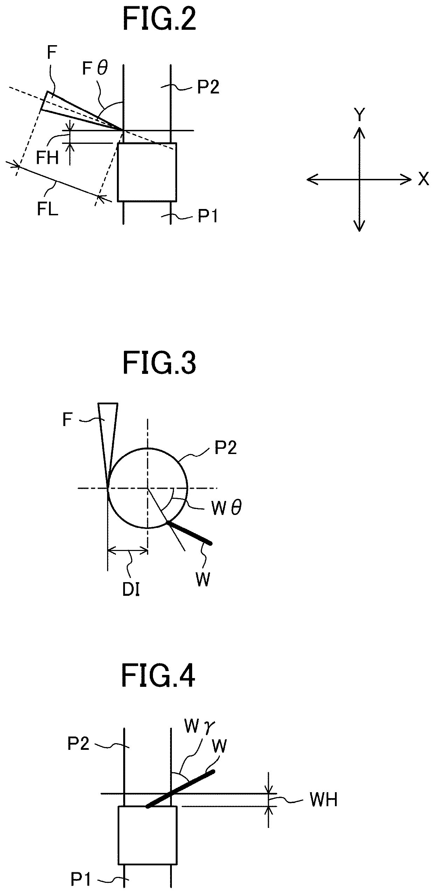

The side camera (11) captures an image of the circumference of both the first and second pipes (PI, P2) from the side of the operator (U) for each 100 ms to obtain side images as shown in FIG. 2. The side images captured during the joining operation each include the flame (F) and the circumference of both the first and second pipes (PI, P2).

The upper camera (12) captures an image of the circumference of both the first and second pipes (PI, P2) from above the operator (U) for each 100 ms to obtain upper images as shown in FIG. 3. The upper images captured during the joining operation each include the distal end of the flame (F) and the circumference of both the first and second pipes (PI, P2). The upper images captured during the feeding operation each include the distal end of the brazing filler metal (W).

The front camera (13) captures an image of the circumference of both the first and second pipes (PI, P2) from the front of the operator (U) for each 100 ms to obtain front images as shown in FIG. 4. The front images captured during the feeding operation each include the distal end of the brazing filler metal (W) and the circumference of both the first and second pipes (P1, P2).

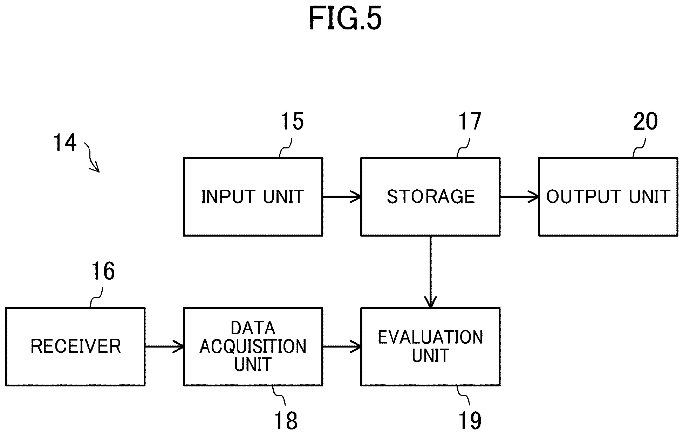

As illustrated in FIG. 5, the evaluating device (14) includes an input unit (15), a receiver (16), a storage (17), a data acquisition unit (18), an evaluation unit (19), and an output unit (20). The function of the evaluating device (14) is realized by a computer.

The input unit (15) receives input of information identifying a grader and an operator (U). The input unit (15) used can be, for example, a keyboard.

The receiver (16) receives a side image, an upper image, and a front image captured for each 100 ms by the side camera (11), the upper camera (12), and the front camera (13).

The storage (17) stores a database including time-series data to be described later.

The data acquisition unit (18) acquires, by image processing, a plurality of kinds of time-series data based on the plurality of side images, upper images, and front images received by the receiver (16), and stores the plurality of kinds of time-series data in the database of the storage (17).

The plurality of kinds of time-series data acquired include time-series data of the height FH of the flame (F), the length FL of the flame (F), the angle Fθ of the flame (F) relative to the vertical direction (the direction in which both the first and second pipes (PI, P2) are extending) based on the plurality of side images. The following Table 1 shows coordinates (XI, Y1) of the proximal end of the flame (F), coordinates (X2, Y2) of the distal end of the flame (F), the height FH of the flame (F), the length FL of the flame (F), and the angle Fθ of the flame (F) on seven frames of the side images obtained for each 100 ms.

**[Table 1]**

| Frame No. | Time [ms] | Upper Left X | Upper Left Y | Lower Right X | Lower Right Y | FH [mm] | FL [mm] | Fθ [deg] |
|---|---|---|---|---|---|---|---|---|
| 0 | 0 | 465 | 650 | 786 | 758 | -12.5915 | 80.17934 | 71.37105 |
| 1 | 100 | 499 | 695 | 817 | 806 | -18.6011 | 75.44092 | 70.49969 |
| 2 | 200 | 553 | 734 | 858 | 843 | -21.8921 | 67.39459 | 70.14161 |
| 3 | 300 | 594 | 740 | 911 | 855 | -20.8905 | 61.24553 | 69.91397 |
| 4 | 400 | 618 | 765 | 929 | 879 | -23.4661 | 57.67686 | 69.67686 |
| 5 | 500 | 630 | 777 | 940 | 893 | -24.8969 | 55.96828 | 69.34109 |
| 6 | 600 | 631 | 779 | 949 | 899 | -25.3262 | 55.88518 | 69.15207 |

Further, time-series data of the distance DI between the flame (F) and the center of both the first and second pipes (PI, P2), and the brazing filler metal introduction position Wθ are acquired based on the plurality of upper images. The brazing filler metal introduction position Wθ is an angle of a line connecting between a contact point between the brazing filler metal (W) and the second pipe (P2) and the center of the second pipe (P2) relative to the horizontal direction on the upper image.

Further, time-series data of the height WH of the brazing filler metal (W) and the angle Wγ of the brazing filler metal (W) relative to the vertical direction (the direction in which both copper pipes are extending) are acquired based on the plurality of the front images. The height WH of the brazing filler metal (W) is a vertical gap between the boundary (joint) between both the first and second pipes (PI, P2) and the intersection between the brazing filler metal (W) and the second pipe (P2).

The height FH of the flame (F) is first-order time-series data, the length FL of the flame (F) is second-order time-series data, the angle Fθ of the flame (F) is third-order time-series data, the distance DI is fourth-order time-series data, the brazing filler metal (W) introduction position Wθ is fifth-order time-series data, the height WH of the brazing filler metal (W) is sixth-order time-series data, and the angle Wγ of the brazing filler metal (W) is seventh-order time-series data.

The evaluation unit (19) evaluates the time-series data acquired by the data acquisition unit (18) according to the following procedures.

The output unit (20) outputs evaluation results from the evaluation unit (19). The output unit (20) used can be, for example, a display.

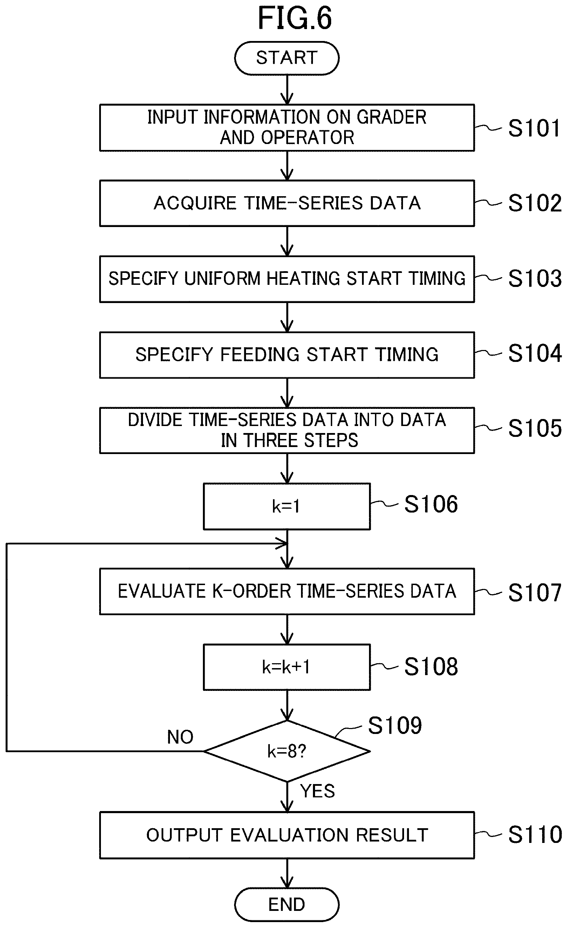

FIG. 6 shows evaluation procedures for the time-series data, performed by the evaluating device (14) configured as mentioned above.

First, in (S101), the input unit (15) receives input identifying a grader and the operator (U). As a result, information identifying the grader and the operator (U) is stored in the storage (17). Further, the grader visually observes the appearance of the brazing and inputs a performance score based on the appearance, to an input unit (15).

Next, in (SI02), the receiver (16) newly receives a plurality of side images, upper images, and front images during the joining operation, and the data acquisition unit (18) acquires time-series data based on these side images, upper images, and front images. Then, the acquired time-series data are stored as a log in the storage (17) in association with the information identifying the operator (U) and the performance score. At this time, the operating time by the operator (U) is also stored in the storage (17) in association with the information identifying the operator (U).

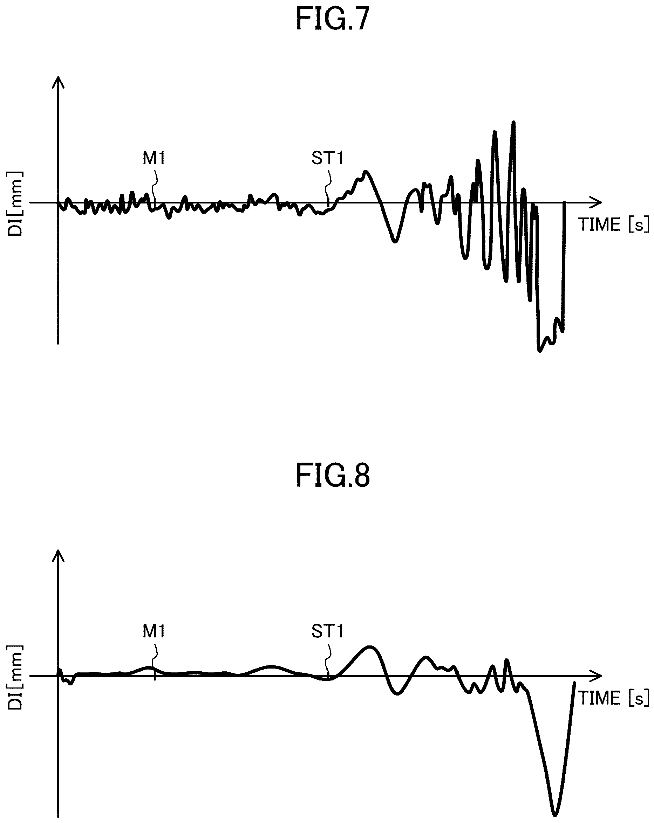

Next, in (S103), the evaluation unit (19) reads out, from the storage (17), the time-series data (second data) of the distance DI between the flame (F) and the center of both the first and second pipes (PI, P2) among the time-series data acquired by the data acquisition unit (18). FIG. 7 shows an example of the time-series data read out. Then, the evaluation unit (19) performs filtering processing on the time-series data read out to remove noises. FIG. 8 illustrates time-series data obtained by subjecting the time-series data shown in FIG. 7 to filtering processing. Then, the evaluation unit (19) calculates the standard deviation of the time-series data that has been subjected to filter processing, per predetermined unit time, and specifies timing ST1 at which the standard deviation exceeds 1 as uniform heating start timing. The unit time is set to, for example, 0.5 seconds or 1 second. The evaluation unit (19) automatically specifies the uniform heating start timing in this manner. This eliminates the need for setting the uniform heating start timing on the evaluating device (14).

If the timing at which the standard deviation of the time-series data before filter processing, i.e., without filtering processing, exceeds 1 is specified as the uniform heating start timing, the timing M1 at which noises occur tends to be specified as the uniform heating start timing as illustrated in FIG. 6. However, in the present embodiment, the uniform heating start timing is specified based on the time-series data that has been subjected to the filter processing. This can accurately specify the uniform heating start timing.

Next, in (S104), the evaluation unit (19) reads out the time-series data (first data) of the brazing filler metal introduction position Wθ among the time-series data acquired by the data acquisition unit (18). The brazing filler metal introduction position Wθ is 0 when the brazing filler metal (W) is not in contact with the second pipe (P2), and exceeds 0 when the brazing filler metal (W) comes into contact with the second pipe (P2). The evaluation unit (19) specifies, as a wire feeding start timing, a timing when the state where the brazing filler metal introduction position Wθ is exceeding 0 has continued for at least time T1 since the brazing filler metal introduction position Wθ exceeds 0 for the first time. The time T1 is set to, for example, one second. The evaluation unit (19) automatically specifies the wire feeding start timing in this manner. This eliminates the need for setting the wire feeding start timing on the evaluating device (14).

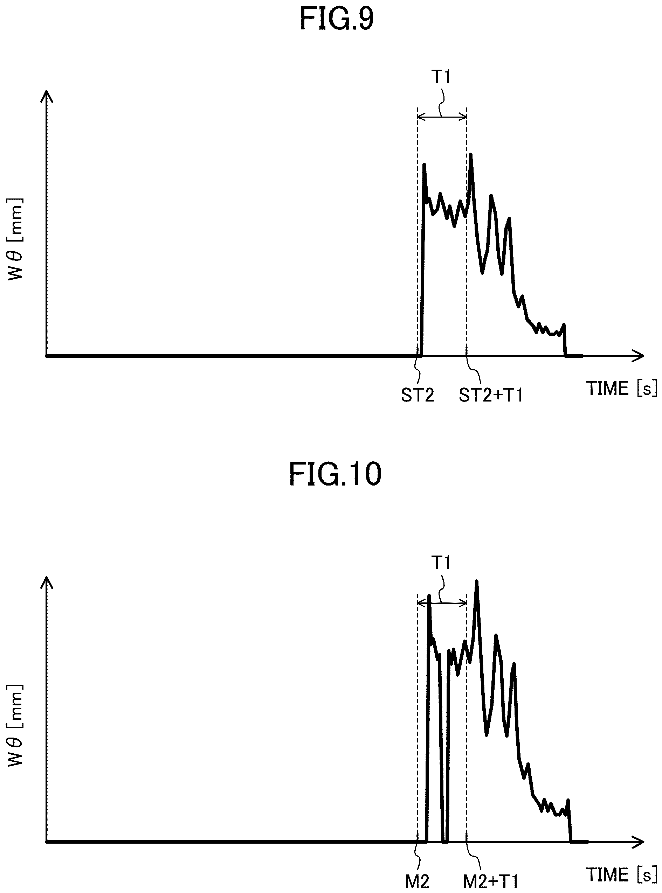

In FIG. 9, the brazing filler metal introduction position Wθ exceeds 0 at the timing ST2, and the state where the brazing filler metal introduction position Wθ is exceeding 0 continues from the timing ST2 to the timing ST2 + T1. Thus, the timing ST2 is specified as the wire feeding start timing.

In FIG. 10, the brazing filler metal introduction position Wθ exceeds 0 at the timing M2, but the brazing filler metal introduction position Wθ reaches 0 again between the timing M2 and the timing M2 + T1. Thus, the timing M2 is not specified as the wire feeding start timing.

Although the process of (S103) is performed after the process of (S104) in the present embodiment, the process of (S103) may be performed before the process of (S104), or the processes of (S103) and (S104) may be performed in parallel.

Thereafter, in (S105), the evaluation unit (19) divides the time-series data acquired in (S102) into the time-series data in the pipe pre-heating step before the uniform heating start timing, the time-series data in the uniform heating step after the uniform heating start timing and before the wire feeding start timing, and the time-series data in the wire feeding step after the wire feeding start timing.

Next, in (S106), the evaluation unit (19) sets k = 1, sets an evaluation score for the joining operation to a predetermined initial value, and the process proceeds to (S107).

In (SI07), the evaluation unit (19) evaluates the k-order time-series data based on the difference between the k-order time-series data and a predetermined evaluation reference value. Different evaluation reference values are used for the evaluations of the time-series data in the pipe pre-heating step, the time-series data in the uniform heating step, and the time-series data in the wire feeding step.

First, the evaluation unit (19) compares the time-series data in the pipe pre-heating step among the k-order time-series data with the evaluation reference value for the pipe pre-heating step, to calculate the difference. When the difference exceeds a first threshold value, some points are deducted from the evaluation score for the joining operation. In addition, the evaluation unit (19) compares the time-series data in the uniform heating step among the k-order time-series data with the evaluation reference value for the uniform heating step, to calculate the difference. When the difference exceeds a second threshold value, some points are deducted from the evaluation score for the joining operation. First, the evaluation unit (19) compares the time-series data in the wire feeding step among the k-order time-series data with the evaluation reference value for the wire feeding step, to calculate the difference. When the difference exceeds a third threshold value, some points are deducted from the evaluation point of the joining operation. The evaluation unit (19) stores the calculated differences as logs in database of the storage (17) in association with the information identifying the operator (U). The evaluation unit (19) also stores the calculated evaluation score for the joining operation in the database of the storage (17). As described above, different evaluation reference values are used for respective evaluations of the time-series data before and after the wire feeding start timing. Setting evaluation reference values used for respective evaluations of the time-series data before and after the wire feeding start timing to appropriate values allows appropriate evaluation of each of the joining operations before and after the wire feeding start timing. Further, the time-series data before and after the wire feeding start timing are evaluated by different evaluation methods using different evaluation reference values. This makes it easier to achieve a more appropriate evaluation than when using the same evaluation method. Further, the time-series data before and after the uniform heating start timing are evaluated by different evaluation methods using different evaluation reference values. This makes it easier to achieve a more appropriate evaluation than when using the same evaluation method.

In (S108), the evaluation unit (19) sets k = k + 1.

In (S109), the evaluation unit (19) determines whether k = 8. If the evaluation unit (19) determines that k = 8 is satisfied, the evaluation unit (19) determines that the evaluations of seven types of time-series data have been completed, and the process proceeds to (S110). If the evaluation unit (19) determined that k = 8 is not satisfied, the process returns to (S107).

In (S110), the output unit (20) reads out and outputs, from the storage (17), the time-series data in all steps, values of the differences calculated for the respective time-series data, and evaluation scores for the joining operations, as evaluation results. An average of the differences of all types of time-series data may be displayed in a radar chart. Accordingly, the evaluation procedures are completed.

The present embodiment allows evaluation of the degree of improvement and the degree of variation in the skill of each operator (U) with reference to the time-series data, the differences between the time-series data and the evaluation reference values, evaluation scores, and the performance scores stored in the storage (17).

The present embodiment further allows each operator (U) to train for joining operations with reference to the time-series data, the differences between the time-series data and the evaluation reference values, evaluation scores, and the performance scores stored in the storage (17). Accordingly, the variation in the proficiency of each operator (U) among the trainers can be reduced. Further, the present embodiment further allows each operator (U) to easily grasp the correcting points of the joining operation with reference to the time-series data, the differences between the time-series data and the evaluation reference values, evaluation scores, and the performance scores stored in the storage (17). Accordingly, the time required to acquire the skills of joining by brazing can be shortened, and the number of pipes (PI, P2) used for training can be reduced. In addition, training of joining operation in the absence of a trainer is facilitated.

In the present embodiment, in (SI03), the uniform heating start timing is specified based on the time-series data of the distance DI between the flame (F) and the center of both the first and second pipes (PI, P2), but may be specified based on other data (second data) of the position of the flame (F). For example, for example, an angle of a line connecting between the contact point between the flame (F) and the second pipe (P2) and the center of both the first and second pipes (PI, P2) relative to the horizontal direction on the upper image may be acquired based on the upper image, and then used to specify the uniform heating start timing in (S103).

Further, the joining operation evaluation system (10) may be provided with a measurement device for measuring a surface temperature of at least one of the first pipe (P1) or the second pipe (P2), and the data acquisition unit (18) may acquire the temperature measured by the measurement device as time-series data. Further, in (SI03), the uniform heating start timing may be specified based on the temperature measured by the measurement device.

Further, in the present embodiment, in (SI04), the wire feeding start timing is specified based on the time-series data of the brazing filler metal (W) introduction position Wθ, but may be specified based on other data (first data) of the position of the brazing filler metal (W). For example, the gap between the brazing filler metal (W) and the center of both the first and second pipes (PI, P2) may be acquired as time-series data based on the upper image, and then may be used to specify the wire feeding start timing in (S104).

If a brazing operation is performed while at least one of the first pipe (P1) or the second pipe (P2) is moving, the data acquisition unit (18) acquires time-series data of the position of at least one of the first pipe (P1) or the second pipe (P2).

The database may store, in addition to the evaluation results for each operator (U), information specifying the place (location) where each operator (U) is trained for the brazing operation in association with the information specifying the operator (U). This makes it possible to grasp tendencies for each place where training of the brazing operation is conducted. In addition, a database storing evaluation results of overseas operators (U) may be referred to from Japan.

In addition, in the present embodiment, the second pipe (P2) is inserted into the first pipe (P1) from above the first pipe (P1) to perform the joining operation, but the present invention can also be applied to a case where the joining operation is performed with the second pipe (P2) inserted into the first pipe (P1) from below the first pipe (P1) or with the second pipe (P2) horizontally (horizontally) inserted into the first pipe (P1).

In addition, in the present embodiment, the time-series data are evaluated by calculating the differences from the evaluation reference values and determining whether the differences exceed threshold values, but the present invention may also be applied to a case where the time-series data are evaluated by any other calculating method.

The present disclosure is useful for an evaluating device for evaluating a joining operation of joining first and second base materials to each other.

### DESCRIPTION OF REFERENCE CHARACTERS

- P1: First Pipe (First Base Material)
- P2: Second Pipe (Second Base Material)
- F: Flame
- W: Brazing Filler Metal
- 14: Evaluating Device
- 18: Data Acquisition Unit
- 19: Evaluation Unit
- 20: Output Unit

## Claims

1. An evaluating device for evaluating a joining operation of joining first and second base materials (PI, P2) with each other, the evaluating device comprising:
a data acquisition unit (18) configured to acquire time-series data of at least one type of a position of at least one of the first base material (P1) or the second base material (P2), a position of a flame (F), a position of a brazing filler metal (W), or a temperature of at least one of the first base material (P1) or the second base material (P2) during the joining operation; and
an evaluation unit (19) configured to evaluate, by different evaluation methods, data before a predetermined wire feeding start timing and data after the predetermined wire feeding start timing among the time-series data acquired by the data acquisition unit (18).

2. The evaluating device of claims 1, wherein
the time-series data acquired by the data acquisition unit (18) include first data of the position of the brazing filler metal (W), and
the evaluation unit (19) specifies the wire feeding start timing based on the first data.

3. The evaluating device of claim 1 or 2, wherein
the evaluation unit (19) evaluates, by different evaluation methods, data before a predetermined uniform heating start timing and data after the predetermined uniform heating start timing among the time-series data acquired by the data acquisition unit (18).

4. The evaluating device of claim 3, wherein
the time-series data acquired by the data acquisition unit (18) includes second data of at least one type of a position of the flame (F) or the temperature of at least one of the first base material (P1) or the second base material (P2), and
the evaluation unit (19) specifies the uniform heating start timing based on the second data.

5. The evaluating device of any one of claims 1 to 4, wherein
the evaluation unit (19) performs the evaluations based on the difference between the time-series data and the evaluation reference values, and the evaluation reference values include an evaluation reference value for data before the wire feeding start timing and an evaluation reference value for data after the wire feeding start timing.
